# EUROPEAN PATENT APPLICATION

(11) **EP 1 970 834 A2**
(43) Date of publication of application: **17.09.2008**
(21) Application number: 07120849.0
(22) Date of filing: 16.11.2007
(51) Int. Cl.: G06F 21/24

(54) **Access controller**

(30) Priority: 14.03.2007 JP 2007065218
(71) Applicant: MITSUBISHI DENKI K.K., Tokyo 100-8310 (JP)
(72) Inventor: Yamauchi, Kenji, Tokyo Tokyo 100-8310 (JP); Fujita, Atsufumi, Tokyo Tokyo 100-8310 (JP)
(74) Representative: Zech, Stefan Markus

(57) **Abstract**

A deciding unit (6) causes a database (20), by employing a table joining function, to join a plurality of real tables to generate a virtual table containing target data that can be provided to an authentic user, acquires the target data from the virtual table, and decides data to be displayed on a client device (1) used by the authentic user based on the target data.

## Description

### BACKGROUND OF THE INVENTION

### 1. Field of the Invention

The present invention relates to an access controller that controls information provided from an information providing server to a client device depending on an access right of a user.

### 2. Description of the Related Art

In user authentication processing performed on the world wide web (WWW), a right of a user to access a web page is checked when the user accesses a web server via a web client. The web client displays web contents according to the access right of the user. For example, Japanese Patent Application Laid-open No. H11-161602 discloses an access control method of determining whether a user who accesses the web server is authentic on web-page basis, thus capable of displaying different web contents depending on the user.

According to Japanese Patent Application Laid-open No. H11-161602, a web server program is executed on the web server, and accordingly, when the user tries to accesses a web page that the web server manages via a client device connected to the web server, a script file corresponding to the web page is called based on the web server program. Before calling the script file, the web server performs user authentication based on login information of the user and judges whether the user has an access right.

When the user is decided to be authentic, the web server accesses, according to a description of the script file, an access-control setting file corresponding to the web page. Based on a description of the access-control setting file, the web server judges whether the web page is available to the user.

If the web server recognizes, after accessing the access-control setting file, that at least a part of the web page can be displayed for the user, the web server accesses a contents-control definition file according to the description of the script file. The contents-control definition file includes information that is used to specify web contents that is to be displayed depending on the access right (hereinafter, "display contents"), and information that defines IDs required to access the display contents and levels of access rights.

After reading the contents of the contents-control definition file and checking the contents that requires the certain access rights and the information on the access rights, the web server accesses a display-contents definition file according to the description of the script file. The display-contents definition file includes text data based on the hyper text markup language (HTML) that contains all types of information of all web pages, each type corresponding to each level of access right, and additional data necessary to edit the text data depending on access rights.

According to the description of a script file and with referring to the access-control setting file, the contents-control definition file, and the display-contents definition file, the web server generates an HTML file containing only the display contents that corresponds to the access right of the user, and thus, that is available to the user. The web server transmits the HTML file to the web client, and the web client displays the display contents. In this manner, the display contents of web pages that correspond to the access right of each user can be displayed.

As described, such a conventional web server accesses an access-control setting file, a contents-control definition file, and a display-contents definition file, and selects display contents based on user login information and the above files. This complicates the processing performed by the web server.

### SUMMARY OF THE INVENTION

It is an object of the present invention to as least partially solve the problems in the conventional technology.

According to an aspect of the present invention, an access controller that controls, depending on an access right of a user, providing of data from an information providing server to a client device in response to a request received from the client device, includes an authenticating unit that judges whether a user of the client device is authentic based on login information provided by the user via the client device; a database for storing therein a plurality of real tables for storing therein the login information of the user and data to be provided to the client device for the user, the database having a table joining function for joining the real tables; a deciding unit that causes the database to joint the real tables by employing the table joining function to generate a virtual table that contains target data that can be provided to an authentic user who is decided to be authentic by the authenticating unit, acquires the target data from the virtual table, and decides data to be displayed on the client device for the authentic user based on the target data; a generating unit that generates display data based on the data decided by the deciding unit; and a permitting unit that permits transmission of the display data from the information providing server to the client device.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic of a sever-client system according to a first embodiment of the present invention;
Fig. 2 is a block diagram of an access controller shown in Fig. 1;
Fig. 3 is a schematic and a flowchart for explaining processing performed by a display-contents setting unit shown in Fig. 2;
Fig. 4 is a schematic for explaining joining of tables by the joining unit shown in Fig. 3;
Fig. 5 is a schematic for explaining joining of tables according to a second embodiment of the present invention;
Fig. 6 is a schematic for explaining joining of tables according to a third embodiment of the present invention; and
Fig. 7 is a schematic for explaining joining of tables according to a fourth embodiment of the present invention.

### DETAILED DESCRIPTION OF THE PREFERRED EMBODIMENTS

Exemplary embodiments of the present invention are explained in detail below with reference to the accompanying drawings.

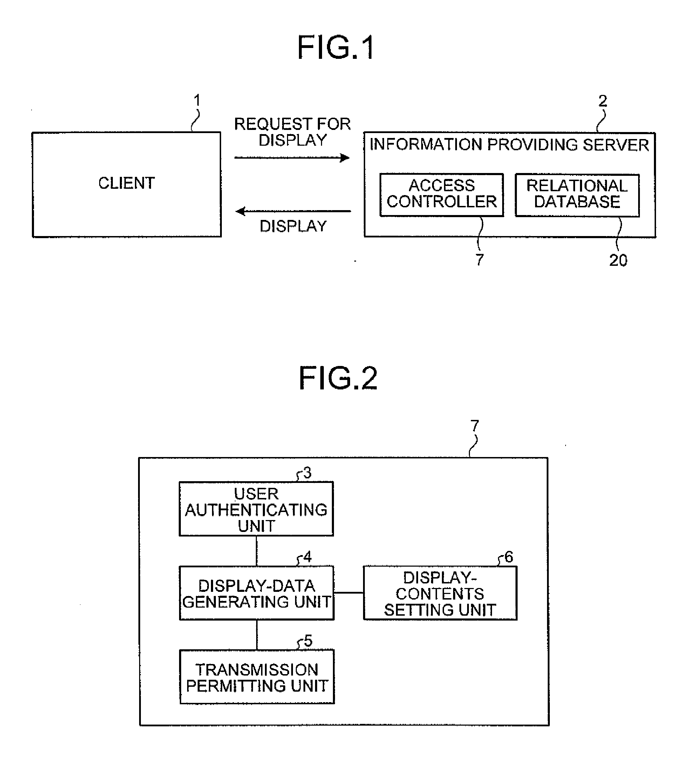

Fig. 1 is a schematic of a sever-client system according to a first embodiment of the present invention. The sever-client system includes a client 1 and an information providing server 2. The information providing server 2 includes an access controller 7 and a relational database 20. Fig. 2 is a block diagram of the access controller 7.

As shown in Fig. 1, the client 1 is connected to the information providing server 2 that can display information via, for example, the Internet or a LAN. Alternatively, a plurality of client devices can be connected to the information providing server 2. The client 1 is, for example, a computer terminal. The information providing server 2 is configured to cause information to be displayed on the client 1 in response to a display request from the client 1. The access controller 7 serves as one of the functions of the information providing server 2 and is constituted of hardware resources of the information providing server 2. The information providing server 2 is, for example, a web server.

As shown in Fig. 2, the access controller 7 includes a user authenticating unit 3, a display-data generating unit 4, a transmission permitting unit 5, and a display-contents setting unit 6.

The user authenticating unit 3 checks the login information of a user who operates the client 1, and judges whether the user has an access right that is required to access information of a web page. The access right of the user is previously set on a server basis. Depending on the access right of the user, the display-contents setting unit 6 selects information that can be provided to a login user who has been logged in (hereinafter, "login-user available information"). Based on the selected information, the display-data generating unit 4 generates display data. The transmission permitting unit 5 permits transmission of the display data to the client 1.

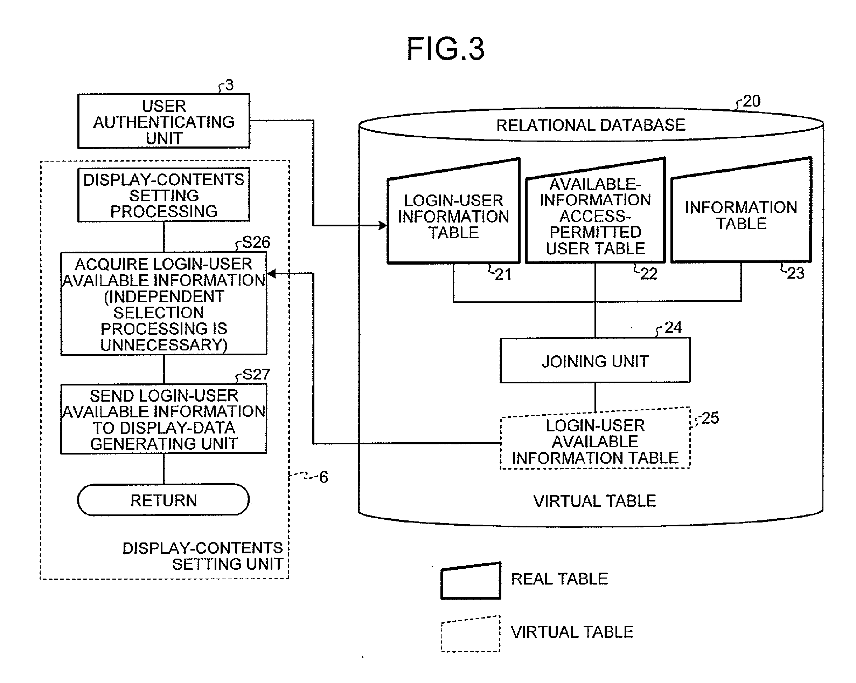

Fig. 3 is a schematic and a flowchart for explaining processing performed by the display-contents setting unit 6. A method of setting display contents is explained below with reference to Figs. 1, 2, and 3. When a user accesses the information providing server 2 via the client 1, the user authenticating unit 3 requires the user to input login information including a login name and a password. According to the login name and password, the user authenticating unit 3 judges whether the user is authentic. If the user is not authentic, the login is rejected and, for example, an error message is displayed on the client 1. If the user is authentic, the login information of the user is stored in a login-user information table 21 of the relational database 20.

The relational database 20 further includes an available-information access-permitted user table 22 and an information table 23. The available-information access-permitted user table 22 contains a list of users who can access information on an information identifier basis. The information table 23 contains information identifiers and pieces of information to be provided to users according to the access rights of users (hereinafter, "provision-information pieces"), each piece corresponding to each of the information identifiers.

The relational database 20 has a function for joining or combining real tables to generate a virtual table (hereinafter, "virtual-table generating function"), and includes a joining unit 24 that joins real tables such as the login user information table 21, the available-information access-permitted user table 22, and the information table 23 to generate a login-user available information table 25 as a virtual table. The virtual table does not have entity records as a real table, such as the login-user information table 21, has. However, the virtual table seems to have only information that can be provided to a login user. Such a virtual table is generated with referring to a definition file that contains, for example, information about which tables should be joined and which column is used as a key for joining the tables.

The display-contents setting unit 6 acquires the login-user available information from the login-user available information table 25. Based on the login-user available information, the display-data generating unit 4 generates display data. The transmission permitting unit 5 permits the transmission of the display data to the client 1. According to the display data, the client 1 displays the information on the screen for the user.

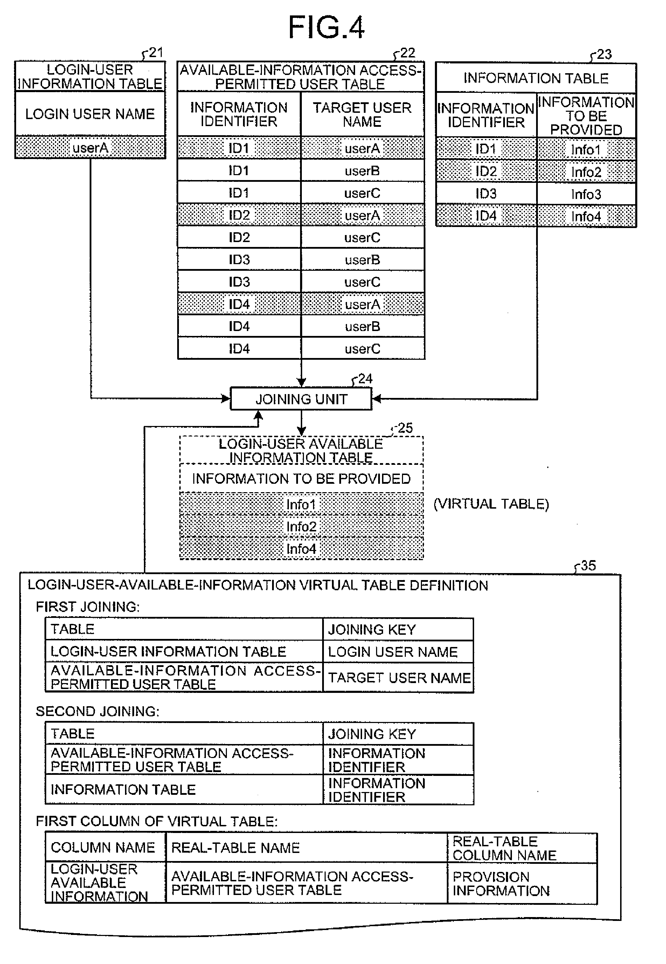

The virtual-table generating function of the relational database 20 is explained below. Fig. 4 is a schematic for explaining joining of tables according to the first embodiment. Once the user, who has the login user name "userA", logs in to the information providing server 2 via the client 1, the user authenticating unit 3 stores the login user name "user A" in the login-user information table 21. Information identifiers and target user names are previously stored in the available-information access-permitted user table 22. As shown in Fig. 3, the user "userA" can access the provision-information pieces with the information identifiers "ID1", "ID2", and "ID4".

The joining unit 24 joins real tables by referring to the login-user-available-information virtual table definition 35 to generate the login-user available information table 25. The login-user-available-information virtual table definition 35 defines first joining and second joining. Specifically, in the first joining, the login-user information table 21 and the available-information access-permitted user table 22 are joined, using the column of login user names and the column of target user names as keys. In the second joining, the available-information access-permitted user table 22 and the information table 23 are joined, using the columns of information identifiers as keys. In the login-user-available-information virtual table definition 35, "first column of the virtual table" defines which column should be contained in the virtual table from among the columns of the original real tables. As shown in Fig. 4, the column of provision-information pieces of the information table 23 is displayed in the virtual table as the column of the login-user available information. As a result, the virtual table, that is, the login-user available information table 25 contains the provision-information pieces "Info1", "Info2", and "Info4" as the login-user available information.

As shown in Fig. 3, the display-contents setting unit 6 refers to the virtual table, that is, the login-user-available information table 25, and acquires the login-user available information (step S26). Because the login-user available information table 25 contains only the login-user available information, the display-contents setting unit 6 can acquire the required information without selecting login-user available information from among the real tables. The display-contents setting unit 6 sends the login-user available information to the display-data generating unit 4 (step S27).

In the conventional method, on the other hand, the display-contents setting unit needs to perform the following selecting processing. First, the display-contents setting unit compares the contents of the login-user information table 21 with the contents of the available-information access-permitted user table 22, and determines which information is the login-user available information. Thereafter, the display-contents setting unit reads only the determined login-user available information from the information table 23, and sends the read login-user available information to the display-data generating unit 4. In other words, the display-contents setting unit needs to perform a process for selecting the login-user available information.

The access controller 7 can be constituted of an information processing device such as a server computer that includes a memory, a central processing unit (CPU), and a storage unit such as a hard disk. The information processing unit stores, in its storage unit, a program for causing the information processing device to function as the user authenticating unit 3, the display-data generating unit 4, and the transmission permitting unit 5, and the display-contents setting unit 6. The program is loaded and executed on the memory to perform the above operations.

According to the first embodiment, because, by using the joining function of the relational database, the login-user available information corresponding to the access right of the login user is selected in the database, the display-contents setting unit 6 can acquire the login-user available information only by referring to the virtual table as a result of the table joining. As a result, a program to implement the display-contents setting unit 6 can be simplified, thus enabling efficiency in programming and quality of the program to increase.

According to the first embodiment, available information is defined on a user basis by referring to the available-information access-permitted user table 22. Thereby, careful access control on each user can be carried. However, if a large number of users use the server-client system, the definition data also increase, which causes management of the server-client system to become troublesome. An access controller according to a second embodiment of the present invention improves management efficiency of a server-client system with a large number of users where a part of the users has the same access right.

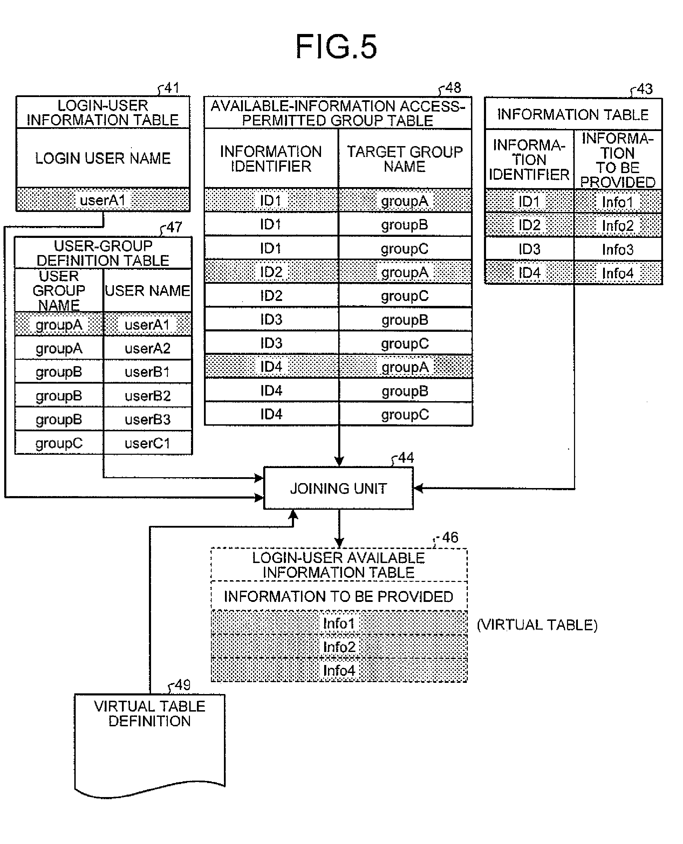

Fig. 5 is a schematic for explaining joining of tables according to the second embodiment. Each user belongs to one of user groups. A user-group definition table 47 defines combinations of user names and correspondent group names. An available-information access-permitted group table 48 defines combinations of information identifiers and corresponding target group names. An information table 43 defines combinations of the information identifiers and corresponding provision-information pieces. A login-user information table 41, the user-group definition table 47, the available-information access-permitted group table 48, and the information table 43 are real tables. A joining unit 44 joins the above real tables by referring to a virtual table definition 49 to generate a login-user available information table 46 that is a virtual table. Configuration other than the point provided above is the same as those according to the first embodiment.

As shown in Fig. 5, the login-user information table 41 indicates that the login user name of a user is "userA1", and the user-group definition table 47 indicates that the user name "userA1" belongs to the group name "groupA". The available-information access-permitted group table 48 indicates that the group of the group name "group A" can access the provision-information pieces with the information identifiers "ID1", "ID2", and "ID4". The information table 43 indicates that the information identifiers "ID1", "ID2", and "ID4" correspond to the provision-information pieces "Info1", "Info2", and "Info4", respectively. The login-user available information table 46 is generated by joining the above real tables, and thus, containing the provision-information pieces "Info1", "Info2", and "Info4".

According to the second embodiment, by only referring to the login-user available information table 46, the display-contents setting unit 6 founds that the login-user available information for the user "userA1" is the provision-information pieces "Info1", "Info2", and "info4". The display-contents setting unit 6 reads the login-user available information for the user "userA1" from the login-user available information table 46, and sends the read information to the display-data generating unit 4.

As described above, the provision-information pieces can be managed on user group basis according to the second embodiment. This improves management efficiency of a server-client system with a large number of users where a part of the users has the same access right.

According to the first embodiment, users who can access information are defined on an information basis by referring to the available-information access-permitted user table 22. Thereby, careful access control can be carried out for each provision-information piece. However, if the system deals with a large number of provision-information pieces, the definition data also increase, which causes management of the server-client system to become troublesome. An access controller according to a third embodiment of the present invention improves management efficiency of a server-client system with a large number of information pieces where a part of the information pieces is managed in the same manner depending on the access right.

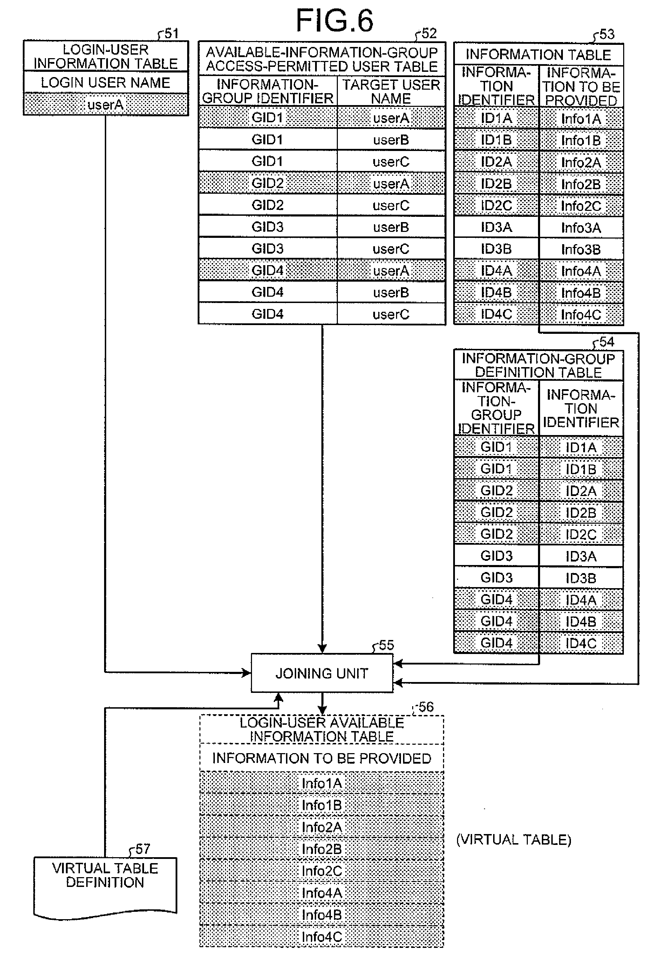

Fig. 6 is a schematic for explaining joining of tables according to the third embodiment. Each provision-information piece belongs to one of information groups. An information-group definition table 54 defines combinations of information identifiers and information-group identifiers. An available-information-group access-permitted user table 52 defines combinations of the information-group identifiers and target user names. An information table 53 defines combinations of the information identifiers and the provision-information pieces. A login-user information table 51, the available-information-group access-permitted user table 52, the information table 53, and the information-group definition table 54 are real tables. A joining unit 55 joins the above real tables by referring to the virtual table definition 49 to generate a login-user-available information table 56 that is a virtual table. Configuration other than the point provided above is the same as those according to the first embodiment.

As shown in Fig. 6, the login-user available information table 56 indicates that the login user name of a user is "userA". The available-information-group access-permitted user table 52 indicates that the user "userA" can access the provision-information pieces that belong to the information groups "GID1", "GID2", and "GID4". Furthermore, the information-group definition table 54 indicates that the information group "GID1" corresponds to the information identifiers "ID1A" and "ID1B", that the information group "GID2" corresponds to the information identifiers "ID2A", "ID2B", and "ID2C", and that the information group "GID4" corresponds to the information identifiers "ID4A", "ID4B", and "ID4C". The information table 53 indicates that the information identifiers "ID1A", "ID1B", "ID2A", "ID2B", "ID2C", "ID4A","ID4B", and "ID4C" correspond respectively to the provision-information pieces "Info1A", "Info1B", "Info2A", "Info2B", "Info2C", "Info4A", "Info4B", and "Info4C". The login-user-available information table 56 is generated by joining the above real tables, and thus, contains the provision-information pieces "Info1A", "Info1B", "Info2A", "Info2B", "Info2C", "Info4A", "Info4B", and "Info4C".

According to the second embodiment, by only referring to the login-user available information table 56, the display-contents setting unit 6 found that the login-user available information for the user "userA" is the provision-information pieces "Info1A", "Info1B", "Info2A", "Info2B", "Info2C", "Info4A", "Info4B", and "Info4C". The display-contents setting unit 6 reads the login-user available information for the user "userA1" from the login-user available information table 56, and sends the read information to the display-data generating unit 4.

As described above, the provision-information pieces can be managed on information group basis according to the second embodiment. This improves management efficiency of a server-client system with a large number of information pieces where a part of the information pieces is managed in the same manner depending on the access right.

There defined accessibility of each of the users to each of the provision-information pieces according to the first embodiment. However, in some cases, it is desirable to further includes information that controls access to the data by the user (hereinafter, "access mode"); for example, one user is allowed only to read the information piece while another user is allowed to update the information piece. To solve the above problem, an access controller according to a fourth embodiment of the present invention sets access right with an access mode (i.e., read only or read-write), thus performing more careful access control.

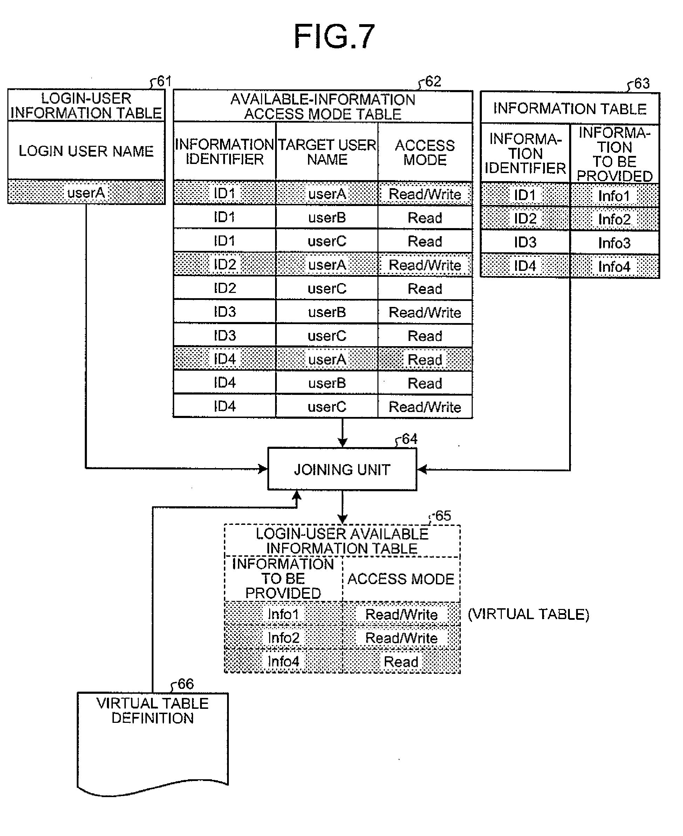

Fig. 7 is a schematic for explaining joining of tables according to the fourth embodiment. An available-information access mode table 62 defines combinations of information identifiers, target user names, and access modes. A login-user information table 61, the available-information access mode table 62, and an information table 63 are real tables. A joining unit 64 joins the above real tables by referring to a virtual table definition 66 and to generate a login-user-available information table 65 that is a virtual table. A configurations other than the point provided above is the same as those according to the first embodiment.

As shown in Fig. 7, the login-user information table 61 indicates that the login user name of a user is "userA", and the available-information access mode table 62 indicates that the user "userA" can access the provision-information pieces of the information identifiers "ID1", "ID2", and "ID4". The available-information access mode table 62 also indicates that the user "userA" can read and write ("READ/Write") the provision-information pieces with "ID1" and "ID2", and write ("Write") the provision-information piece of "ID4". The information table 63 indicates that the information identifiers "ID1", "ID2", and "ID4" correspond to the provision-information pieces "Info1", "Info2", and "Info4", respectively. The login-user-available information table 65 that is a virtual table is generated by joining the above real tables, and thus, contains the provision-information pieces "Info1" ("Read/Write"), "Info2" ("Read/Write"), and "Info4" ("Read").

According to the fourth embodiment, by only referring to the login-user available information table 65, the display-contents setting unit 6 founds that the login-user available information for userA and the access mode to each of the login-user available information. The display-contents setting unit 6 reads the login-user available information and the access mode, and sends the read information to the display-data generating unit 4.

According to the fourth embodiment, it is possible to perform careful access control by setting the access right with access mode.

According to the first to the fourth embodiments of the present invention, the information providing server 2 includes the access controller 7 and the relational database 20. However, both or any one of the access controller 7 and the relational database 20 can be independent of the information providing server 2.

According to an embodiment of the present invention, the display-contents setting unit acquires the login-user available information only by referring to the virtual table as a result of the table joining, so that the selecting process performed by the display-contents setting unit can be simplified. Therefore, the program to implement the display-contents setting unit can also be simplified, thus enabling efficiency in programming and quality of the program to increase.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An access controller (7) that controls, depending on an access right of a user, providing of data from an information providing server (2) to a client device (1) in response to a request received from the client device (1), the access controller (7) comprising:
an authenticating unit (3) that judges whether a user of the client device (1) is authentic based on login information provided by the user via the client device (1);
a database (20) for storing therein a plurality of real tables for storing therein the login information of the user and data to be provided to the client device (1) for the user, the database (20) having a table joining function for joining the real tables;
a deciding unit (6) that causes the database (20) to joint the real tables by employing the table joining function to generate a virtual table that contains target data that can be provided to an authentic user who is decided to be authentic by the authenticating unit (3), acquires the target data from the virtual table, and decides data to be displayed on the client device (1) for the authentic user based on the target data;
a generating unit (4) that generates display data based on the data decided by the deciding unit (6); and
a permitting unit (5) that permits transmission of the display data from the information providing server (2) to the client device (1).

2. The access controller (7) according to claim 1, wherein the data decided by the deciding unit (6) is defined based on a user group to which the user belongs.

3. The access controller (7) according to claim 1 or 2, wherein the data decided by the deciding unit (6) is defined based on information groups, each information group including at least one piece of information.

4. The access controller (7) according to any one of claims 1 to 3, wherein the data decided by the deciding unit (6) includes controlling information that controls access to the data by the user.
